# EUROPÄISCHE PATENTSCHRIFT

(11) **EP 1 339 534 B1**
(45) Veröffentlichungstag und Bekanntmachung des Hinweises auf die Patenterteilung: **30.05.2007**
(21) Anmeldenummer: 01986403.2
(22) Anmeldetag: 10.12.2001
(51) Int. Cl.: B29B 11/16, B29C 70/22, B29C 70/18

(54) **VERFAHREN ZUM HERSTELLEN VON MEHRSCHICHTIGEN TFP-PREFORMS MITTELS SCHMELZBAREN FIXIERFÄDEN**
METHOD FOR PRODUCING MULTILAYER TAILORED FIBER PLACEMENT (TFP) PREFORMS USING MELTABLE FIXING FIBERS
PROCEDE DE PRODUCTION AU MOYEN DE FILS DE FIXATION FUSIBLES DE PREFORMES MULTICOUCHE A PLACEMENT DES FIBRES ADAPTE

(30) Priorität: 08.12.2000 DE 10061028
(43) Veröffentlichungstag der Anmeldung: 03.09.2003
(73) Patentinhaber: EADS Deutschland GmbH, 85521 Ottobrunn (DE)
(72) Erfinder: GESSLER, Andreas, 85540 Haar (DE)
(86) Internationale Anmeldenummer: PCT/EP2001/014442
(87) Internationale Veröffentlichungsnummer: WO 2002/045932

(56) Entgegenhaltungen:
- EP-A- 0 193 478
- EP-A- 0 272 083
- WO-A-00/56539
- FR-A- 1 394 271
- FR-A- 2 568 575
- US-A- 6 105 223

## Beschreibung

Die vorliegende Erfindung betrifft ein Verfahren zum Herstellen von mehrschichtigen TFP-Preforms mittels schmelzbaren Fixierfäden, insbesondere zum Herstellen derartiger TFP-Preforms mit beliebiger Dicke und ohne störende Zwischenschichten.

Es ist bekannt, dass TFP-Aufbauten (Tailored-Fiber-Placement) durch Aufnähen von Verstärkungsfasern auf einen Untergrund entstehen. Die Dicke eines einzelnen TFP-Aufbaus ist jedoch auf ca. 5mm begrenzt, da das Aufnähen weiterer Verstärkungsfasern auf den bereits gebildeten Aufbau die zuvor aufgenähten Fasern beschädigt. Zudem verbleiben die bisher zur Fixierung der Verstärkungsfasern verwendeten Nähfäden ebenso wie der Nähuntergrund und die auf der Unterseite des Trägermaterials angesammelten Unterfäden im TFP-Aufbau enthalten. Bei der Herstellung von mehrschichtigen TFP-Strukturen bestehend aus mehr als zwei einzelnen TFP-Aufbauten befindet sich somit neben den Fixierfäden mindestens eine dieser fixiergarnreichen Schichten im Inneren der Struktur.

Eine Preform ohne Zwischenschicht konnte bisher aus maximal zwei TFP-Aufbauten gebildet werden, wobei die zwei einzelnen TFP-Aufbauten derart miteinander verbunden sind, dass Untergrund und Unterfadenanhäufung jeweils an der Außenseite der gebildeten Struktur liegen: Dies bedeutet gleichzeitig, dass eine derartige, aus zwei einzelnen TFP-Aufbauten gebildete Preform eine maximale Dicke von ca.10 mm aufweist. Aber auch hier sind die Nähfäden weiterhin nach dem Imprägnieren und Aushärten im Faserverbundteil enthalten und stellen Störstellen im Material dar. Die durch die Fixierfäden hervorgerufenen Einschnürungen und Verdrängungen der Verstärkungsfasern und die meist schlechte Anbindung der Fixierfäden an das Matrixmaterial wirken sich nachteilig auf die mechanischen Eigenschaften des Werkstoffes aus.

Aus der Druckschrift EP 0 567 845 A1 ist beispielsweise eine formbare, multiaxiale Verstärkungsstruktur bekannt, bei der die Verstärkungsfäden mittels Sticktechnologie in jeder beliebigen Richtung beanspruchungsgereeht positioniert werden können. Die Glasübergangstemperatur (bzw. Erweichurigste'mperatur) der Stickfäden liegt hierbei oberhalb der Erweichungstemperatur des Verbundmaterials, um eine sichere Fixierung der Verstärkungsfäden innerhalb des Verbundes, bis zur fertigen Ausformung zu gewährleisten.

DE 196 28 388 A1 beschreibt ferner einen kraftflußgerechten, multiaxialen, mehrlagigen Faservorformling mit zumindest bereichsweiser Z-Achsen-Verstärkung und ein Verfahren zu seiner Herstellung. Dabei werden mindestens bereichsweise Z-Achsen- Verstärkungsfäden zur Aufnahme des Kraftflusses in Richtung der Z-Achse mittels Sticken eingearbeitet.

Die Druckschrift WO 00/56539 A (bzw. EP 1 125 728 A1) offenbart ein faserverstärktes Verbundsystem und ein Verfahren gemäß dem Oberbegriff des Anspruchs 1, welches Verbundsystem eine nicht gewebte Unterlage und mehrere Lagen ausgerichteter Verstärkungsfasern aufweist, wobei die Lagen der Verstärkungsfasern durch Garn in z-Richtung miteinander verbunden sind.

Der vorliegenden Erfindung liegt somit die Aufgabe zugrunde, ein Verfahren zu schaffen, mit dem mehrschichtige TFP-Preforms beliebiger Dicke und ohne störenden Einfluß von Fixierfäden oder Zwischenschichten auf einfache Weise hergestellt werden können.

Gelöst wird diese Aufgabe durch ein Verfahren mit den Merkmalen des Patentanspruchs 1. Weitere vorteilhafte Ausgestaltungen der Erfindung ergeben sich aus den Unteransprüchen.

Zentraler Gedanke ist hierbei, dass Verstärkungsfasern auf eine Unterlage unter Verwendung eines chemisch oder thermisch schmelzbaren Fixierfadens aufgenäht werden, so dass eine Verstärkungsfaserstruktur entsteht, wobei der Fixierfaden zunächst zur Fixierung der Verstärkungsfasern auf der Unterlage dient und anschließend geschmolzen wird, so dass sich der Fixierfaden unter Vorfixierung der Verstärkungsfasern auflöst und die mechanischen Eigenschaften der Verstärkungsfaserstruktur nicht beeinflußt.

Die Verwendung eines derartigen Fixierfadens hat den Vorteil, dass beispielsweise die durch das Aufnähen in den Fasern hervorgerufenen Einschnürungen und Verdrängungen nach dem Schmelzen wieder freigegeben werden, so dass der Fixierfaden keinen störenden Einfluß auf die mechanischen Eigenschaften der Struktur ausübt. Die Freigabe der Einschnürungen und Verdrängungen hat ferner eine geringere Faserwelligkeit und somit eine bessere Faserausnutzung zur Folge. Darüber hinaus ist bei teilweisem oder vollständigem Auflösen des Fadens kein Interface vorhanden, von dem frühzeitig Risse ausgehen könnten.

Weitere Vorteile des zum Aufnähen verwendeten Fixierfadens, ergeben sich aus der Klebewirkung des geschmolzenen Fixierfadens. Dadurch wird eine Vorfixierung der Verstärkungsfaserstruktur erreicht, so dass die Verstärkungsfaserstruktur eine ausreichende Stabilität zur Weiterverarbeitung erhält. Diese damit verbundenen Vorteile werden vor allem im Zusammenhang mit der zweiten und dritten;Ausführungsform ersichtlich.

Gemäß einer ersten Ausführungsform wird eine mehrschichtige TFP-Preform derart hergestellt, dass mindestens zwei mittels schmelzbarem Fixierfaden vernähte Verstärkungsfaserstukturen zu einer mehrschichtigen Stapelstruktur gestapelt werden. Anschließend wird der Fixierfaden geschmolzen, so dass er sich vollständig in der Stapelstruktur auflöst. Nach dem Imprägnieren und Aushärten der Stapelstruktur erhält man eine mehrschichtige TFP-Preform ohne Fixierfäden.

Zweckmäßigerweise kann hierbei das Auflösen des Fixierfadens, je nach Art des verwendeten Fadens, unterschiedlich erfolgen. Der Fixierfaden kann beispielsweise durch chemische Reaktion mit dem zum imprägnieren bzw. Aushärten der mehrschichtigen TFP-Preform verwendeten Harz schmelzen. Dabei löst sich der Fixierfaden chemisch in der zum Imprägnieren verwendeten Matrix auf, so dass er in der fertigen, ausgehärteten TFP-Preform nicht mehr vorhanden sind und somit keine störende Einflüsse aufgrund von Einschnürungen oder Verdrängungen auf die mechanischen Eigenschaften ausübt. Diese Vorgehensweise ist ökonomisch und insbesondere dann vorteilhaft, wenn mit möglichst wenigen Prozessschritten eine TFP-Preform hergestellt werden soll, da das Auflösen automatisch während des Imprägnier- und Äushärteprozesses erfolgt.

Diese Art und Weise des Schmelzen findet nicht nur beim Herstellen von mehrschichtigen TFP-Strukturen mit Zwischenschicht aus Nähuntergrund Anwendung, sondern auch beim Herstellen von TFP-Preforms ohne Zwischenschichten, die entweder lediglich aus einer oder aus zwei einzelnen, sandwichartig zusammengefügten Verstärkungsfaserstrukturen bestehen, deren jeweils nach außen weisenden Unterlagen nach dem Imprägnier- bzw. Aushärteschritt abgelöst werden können.

Alternativ kann der Fixierfaden durch externe Temperatureinwirkung geschmolzen werden. Dabei wird der Fixierfaden auf eine Temperatur oberhalb seines Schmelzpunktes erwärmt. Das Schmelzen des Fixierfadens aufgrund externer Wärmeeinwirkung ist vor allem dann vorteilhaft, wenn ein Auflösen des Fixierfadens bereits vor dem Imprägnier- und Aushärteprozess erwünscht wird. Dadurch sind Korrekturen einer bereits gestapelten Struktur vor dem abschließenden Imprägnier- und Aushärteprozess möglich. Folglich ermöglicht diese Art des Erwärmens bzw. Schmelzens eine flexiblere Handhabung.

Neben der Verwendung von exterenen Wärmequellen kann auch die Erwärmung während des Imprägnier- und Aushärteprozesses ausgenutzt werden. D.h. der Fixierfaden schmilzt aufgrund der während des Imprägnier- bzw. Aushärteprozesses einwirkenden Wärme. Auch in diesem Fall erfolgt das Schmelzen und Imprägnieren/Aushärten in einem Arbeitsschritt.

Gemäß einer zweiten Ausführungsform wird der Fixierfaden unmittelbar nach dem Aufnähen der Verstärkungsfasern auf den Untergrund durch externe Wärmeeinwirkung geschmolzen. Mehrere derartige Verstärkungsfaserstrukturen werden anschließend zu einer mehrschichtigen Stapelstruktur gestapelt, die dann imprägniert und ausgehärtet wird.
Vorteilhaft ist hier neben dem Auflösen des Fixierfadens, dass durch die Klebewirkung des thermisch geschmolzenen Fixierfadens eine Vorfixierung der Verstärkungsfasern erzielt wird, was der Verstärkungsfaserstruktur ohne Vorhandensein von Fadenverschlingungen eine ausreichende Stabilität verleiht. Mit anderen Worten, ein Schmelzen des Fixierfadens ist nicht nur nach dem Stapeln von mehreren Verstärkungsstrukturen möglich, sondern auch bereits vor dem Stapeln.

Auf diese Art und Weise können nicht nur dicke, mehrschichtige TFP-Preforms mit Zwischenschichten hergestellt werden, sondern auch TFP-Preforms ohne Zwischenschichten, bestehend aus zwei sandwichartig verbundenen Verstärkungsfaserstrukturen, wobei die Unterlagen jeweils nach außen weisen und - ähnlich wie bei einer zweischichtigen TFP-Preform gemäß der ersten Ausführungsform - nach dem Auflösen des Fixierfadens durch einfaches Abziehen entfernt werden können.

Gemäß einer dritten Ausführungsform wird eine beliebig dicke, mehrschichtige TFP-Preform ohne störende Zwischenschicht aus Unterlage und Fixierfäden dadurch hergestellt, dass, wie in den vorherigen Fällen, zunächst Verstärkungsfasern auf eine Unterlage unter Verwendung eines thermisch schmelzbaren Fixierfadens aufgenäht werden, so dass eine Verstärkungsfaserstruktur entsteht. Als nächstes wird der Fixierfaden mit Hilfe einer externen Wärmeeinwirkung auf eine Temperatur oberhalb seines Schmelzpunktes erwärmt. Der Fixierfaden schmilzt und aufgrund der Klebewirkung des geschmolzenen Fixierfadens werden die Verstärkungsfasern vorfixiert. Dies ermöglicht vorteilhafterweise, dass anschließend die Unterlage von der so gebildeten Verstärkungsfaserstruktur abgelöst werden kann und die vorfixierten Verstärkungsfasern eine ausreichende Stabilität aufweisen, so dass sie zu einer mehrschichtigen Struktur gestapelt werden können. Somit hat die entstehende Struktur den Vorteil, dass sie keine störende Zwischenschichten aus Unterlage und angesammelten Fixierfäden enthält.

Der zum Aufnähen verwendete Fixierfaden ist zweckmäßigerweise ein thermoplastischer Faden bzw. ein Schmelzklebegarn. Ein Schmelzklebegarn, das sich durch Erwärmung über dessen Schmelzpunkt auflöst, ist beispielsweise ein CoPolyamid Multifilament-Schmelzklebegarn (Grilon® K85110 dtex). Durch diese Fäden bzw. Garne wird ein Auflösen sowie eine ausreichende Vorfixierung der Verstärkungsfaserstruktur aufgrund der Klebewirkung gewährleistet. Ferner kann die Verwendung von thermoplastischen Fäden vorteilhaft für die mechanischen Eigenschaften sein, da spröde Harze üblicherweise unter Zugabe von Thermoplasten schlagzäh modifiziert werden.

Ein weiterer Vorteil besteht darin, dass die Verstärkungsfasern auf der Unterlage kraftflussorientiert angeordnet werden, so dass je nach gewünschter Anwendung die Verstärkungsfasern in gewünschter Hauptsparinungsrichtung auf der Unterlage angeordnet sind. Somit kann durch den erfindungsgemäßen Gedanken diese kraftflussgerechte Faserablage auch auf mehrschichtige TFP-Preforms beliebiger Dicke übertragen werden. Daneben kann auch, in analoger Weise, eine quasiisotrope Struktur aufgebaut werden.

Nachstehend wird die Erfindung anhand der beigefügten Zeichnungen in näheren Einzelheiten beschrieben. Darin zeigen:
- Fig. 1: eine Darstellung zur Erläuterung.des Anbringens von Verstärkungsfasern auf einem Trägermaterial;
- Fig. 2: eine Schnittansicht der in Figur 2 dargestellten Anordnung;
- Fig. 3a - 3c: mehrschichtige TFP-Preforms mit Zwischenschichten aus Unterlage und Unterfadenansammlung gemäß dem Stand der Technik;
- Fig. 4: schematische Darstellung des erfindungsgemäßen Mehrfachaufbaus einer beliebig dicken TFP-Preform ohne Zwischenschichten; und
- Fig. 5, 6: Schnittansichten einer Probe; die einer erfindungsgemäß hergestellten TFP-Preform entnommen ist, dargestellt in unterschiedlichen Maßstäben.

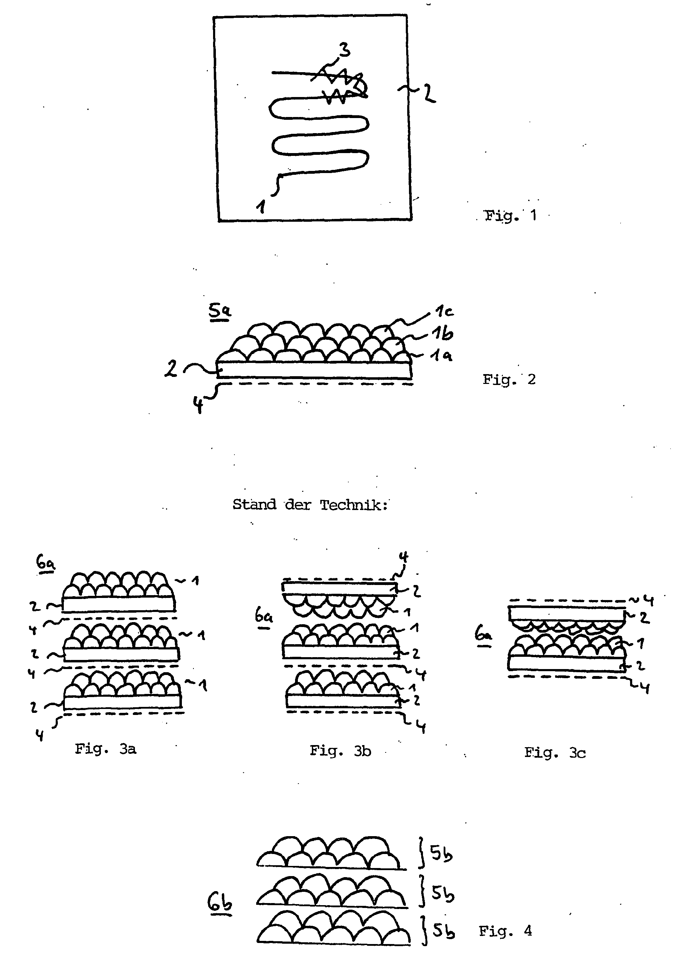

Figur 1 zeigt eine schematische Darstellung zum Erläutern des Anbringens einer Verstärkungsfaser 1 auf einem Trägermaterial 2. Zuerst wird die Verstärkungsfaser 1 in gewünschter Hauptspannungsrichtung auf die Unterlage 2 aufgelegt und anschließend mit einem Fixierfaden 3 auf die Unterlage 2 aufgenäht. Das Aufnähen erfolgt mittels bekanntem Verfahren, wobei die Verstärkungsfaser 1 beispielsweise mit einer Zickzack-Naht auf dem Nähuntergrund 2 befestigt wird. Die Unterlage 2 kann hierbei ein sogenanntes Abreissgewebe bzw. ein Glasfasergewebe sein, das eine Flächendichte ≤ 100 g/m² aufweist, oder aber ein anderes geeignetes Material. Die Verstärkungsfasern 1 sind üblicherweise Rovings aus Glas- und Carbonfilamenten.

In Figur 1 ist lediglich eine erste Schicht an Verstärkungsfasern dargestellt, wobei die Verstärkungsfasern unidirektional angeordnet sind. Eine weitere Verstärkungsfaserschicht kann auf gleiche Weise auf die bereits gebildete Struktur aufgenäht werden. Dabei kann die Orientierung der Verstärkungsfasern entweder der der ersten Schicht entsprechen oder je nach gewünschter Anwendung auch einen anderen Orientierungswinkel bezüglich der ersten Verstärkungsfaserschicht einnehmen. D.h., je nach Anwendungsbedarf kann die Verstärkungsfaser unidirektional in Hauptspännungsrichtung oder entsprechend der gewünschten Kraftflussorientierung aufgenäht werden.

Das Übereinanderschichten von Verstärkungsfasern ist jedoch begrenzt, da beim Aufnähen von neuen Verstärkungsfaserschichten eine den Fixierfaden führende Nadel (nicht dargestellt) durch die bereits aufgenähten Verstärkungsfasern durchgeführt wird, was zu einer Verletzung, Einschnürung oder Verdrängung der bereits aufgenähten Fasern führen kann. Ferner ist mit zunehmender Dicke des Aufbaus die Gefahr gegeben, dass die Nadel beim Durchstoßen durch die bereits aufgenähten Fasern eine Verletzung der Fasern in den unteren Schichten hervorruft. Aus diesem Grund ist die Dicke des Schichtaufbaus aus Verstärkungsfasern auf ca. 5 mm begrenzt.

Figur 2. zeigt eine schematische Querschnittsansicht eines Aufbaus bestehend aus mehreren übereinander angeordneten Verstärkungsfasern. Es sind drei Verstärkungsfaserschichten 1a, 1b, 1c angedeutet, die auf der Unterlage 2 aufgenäht sind. Der Fixierfaden ist in Figur 2 lediglich als Unterfadenansammlung auf der Unterseite des Trägermaterials 2 schematisch durch eine gestrichelte Linie 4 angedeutet. Im folgenden wird dieser Aufbau aus Verstärkungsfaserschichten 1a, 1b, 1c, Unterlage 2 und Unterfadenansammlung 4 als Verstärkungsfaserstruktur 5a bezeichnet.

Soll aus einer derartigen, in Figur 2 schematisch dargestellten Verstärkungsfaserstruktur 5a eine TFP-Preform hergestellt werden, so erfolgt dies gemäß dem Stand der Technik derart, dass entweder mehrere einzelne Verstärkuhgsfaserstrukturen 5a beliebig übereinander gelagert werden, was schematisch in Fig. 3a und 3b angedeutet ist, oder dass zwei einzelne Verstärkungsfaserstrukturen 5a sandwichartig zusammengefügt werden, wobei die Unterlagen 2 mit den angesammelten Unterfäden 4 jeweils nach außen weisen (vgl. Fig. 3c). Anschließend werden die derartig gebildeten Stapelstrukturen 6a mit einem bekannten Verfahren imprägniert und ausgehärtet. Dies bedeutet jedoch, dass die in Fig. 3a bzw. 3b illustrierte bekannte TFP-Preform eine zwischen den einzelnen Verstärkungsfaserschichten liegende Schicht aus Trägermaterial 2 und angesammelten Unterfäden 4 aufweist. Ferner ist eine Preform ohne Zwischenschicht gemäß dem in Fig. 3c dargestellten Stand der Technik auf eine Dicke von maximal ca.10 mm begrenzt. Zudem sind in den bekannten Strukturen die Fixierfäden enthalten (nicht dargestellt), die aufgrund der beim Nähprozeß eingebrachten Einschnürungen und Verdrängungen einen negativen Einfluß auf die mechanischen Eigenschaften der Struktur haben können.

Statt der üblichen Garnmaterialien zur Fixierung der Verstärkungsfasern 1 auf der Unterlage 2 wird erfindungsgemäß ein sogenannter schmelzbarer Fixierfaden verwendet. Der Fixierfaden zeichnet sich insbesondere dadurch aus, dass er sich entweder durch_chemische Reaktion mit dem zum Imprägnieren verwendeten Stoff (typischerweise ein Harzsystem) oder durch externe Wärmeeinwirkung vollständig auflöst. Dadurch wird einerseits eine ausreichende Fixierung auf der Unterlage beim Aufnähen erreicht, da in diesem Fall der Faden zur üblichen Fixierung dient, und andererseits löst sich der Fixierfaden auf, so dass beim Aufnähen verursachte Einschnürungen wieder freigegeben werden und der Fixierfaden keinen störenden Einfluß auf die mechanischen Eigenschaften der fertigen, d.h. imprägnierten und ausgehärteten TFP-Preform ausübt.

Neben der Verwendung des sich chemisch auflösenden Fadens zur Herstellung einer einschichtigen TFP-Preform wird er auch zur Herstellung einer TFP-Preform bestehend aus zwei oder mehreren Verstärkungsfaserstrukturen (vgl. Fig. 3a- 3c) verwendet. Die Verstärkungsfasern 1 werden mit dem Fixierfaden auf eine Unterlage 2 aufgenäht, so dass die in Fig. 2 dargestellte Verstärkungsfaserstruktur 5a entsteht. Im nächsten Schritt können beispielsweise zwei Verstärkungsfaserstrukturen 5a gemäß der Anordnung in Fig. 3c derart sandwichartig zusammengefügt werden, dass die Unterlagen 2 jeweils nach außen weisen. Anschließend wird die so gebildete zweilagige Sandwichstruktur mit einem Harzsystem imprägniert und ausgehärtet. Nach dem Imprägnier- und Aushärteprozess sind_aufgrund des sich chemisch aufgelösten Fixierfadens keine Fixierfäden 3 oder Unterfäden 4 in der fertigen TFP-Preform enthalten, so dass zudem die Unterlagen 2 durch einfaches Abziehen oder Ablösen entfernt werden können.

Ebenso können für Anwendungen, bei denen Zwischenschichten aus Unterlagen nicht stören, mehrere Verstärkungsfaserstrukturen 5a in beliebiger Weise, wie exemplarisch in Fig. 3a und 3b dargestellt, bis zu einer gewünschten Dicke gestapelt werden. Wie im zuvor beschriebenen Fall wird anschließend die gebildete Struktur unter chemischem Auflösen des Fixierfadens imprägniert und ausgehärtet.

Anstatt eines chemisch schmelzbaren Fixierfadens kann zum Aufnähen der Verstärkungsfasern auch ein thermisch schmelzbarer Fixierfaden mit niedrigem Schmelzpunkt verwendet werden. Ein derartiger Fixierfaden ist beispielsweise das Schmelzklebegarn Grilon® K85110 dtx der Firma EMS Chemie, das eine Schmelztemperatur von ungefähr 85 °C aufweist. Ferner sei angemerkt, das der Schmelzpunkt der oben genannten, durch chemische Reaktion schmelzende Fixiergarn deutlich höher liegt. Selbstverständlich können die oben beschriebenen TFP-Preforms auch unter Verwendung eines thermisch schmelzbaren Fixierfadens hergestellt werden. Das Schmelzen des Fixierfadens erfolgt hierbei durch Wärmeeinwirkung, was nachstehend in näheren Einzelheiten beschrieben wird.

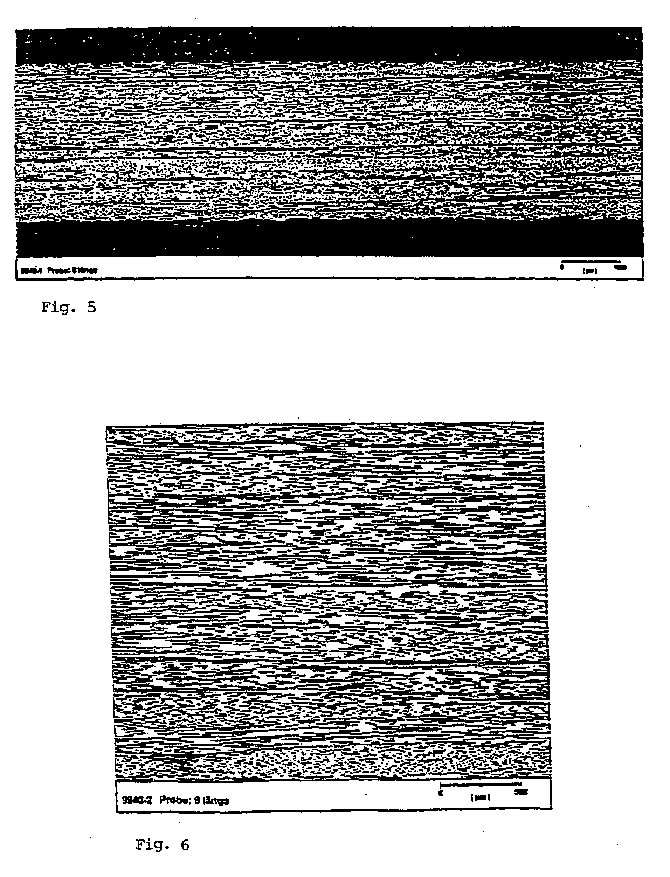

Ferner sind für manche Anwendungen Zwischenschichten aus Unterlage unerwünscht bzw. störend, so dass diese in geeigneterweise entfernt werden müssen. Zu diesem Zweck werden die Verstärkungsfasern 1 unter Verwendung eines thermisch schmelzbaren Fixierfadens mit niedrigem Schmelzpunkt auf die Unterlage 2 aufgenäht. Durch die Verwendung eines derartigen schmelzbaren Fixierfadens wird wiederum einerseits eine ausreichende Fixierung der Fasern 1 auf der Unterlage 2 gewährleistet, andererseits wird durch das Auflösen des Fadens 3 unter Wärmeeinwirkung und dessen Klebefähigkeit eine ausreichende Stabilität bzw. Festigkeit der Verstärkungsfaserschichten erzielt, so dass die Unterlage 2 anschließend leicht von den Verstärkungsfasern 1 abgezogen werden kann, ohne den Schichtaufbau der Verstärkungsfasern in irgendeiner Weise negativ zu beeinflussen. Es entsteht eine Verstärkungsfaserstruktur ohne Unterlage, die in Fig. 4 mit Bezugsziffer 5b bezeichnet ist. Ferner ist in Fig. 4 eine Stapelstruktur 6b dargestellt, die aus mehreren Verstärkungsfaserstrukturen ohne Unterlage 5b besteht. Nach dem Imprägnieren und Aushärten erhält man so auf einfache Weise eine beliebig dicke, mehrschichtige TFP-Preform ohne Zwischenschichten.

Die zum Auflösen bzw. Schmelzen des Fixierfadens erforderliche Erwärmung kann je nach Anwendungszweck bzw. in Abhängigkeit von der gewünschten Struktur unterschiedlich erfolgen. Der Fixierfaden kann beispielsweise aufgrund der Temperatureinwirkung während des Imprägnier- bzw. Aushärteprozesses geschmolzen werden. Die mittels Fixierfaden 3 auf die Unterlage 2 aufgenähten Verstärkungsfasern 1 werden beispielsweise mit einem heißhärtenden Harzsystem (z.B. Hexcel RTM6; Infiltrationstemperatur ca. 120 °C; Härtetemperatur ca. 160-180 °C) imprägniert und anschließend ausgehärtet. Aufgrund der hohen Temperatur während der Imprägnier- bzw. Aushärtephase schmilzt der Fixierfaden und löst sich im Harz auf. Da die Fixierfäden auf diese Weise verschwinden, läßt sich nach dem Aushärten die Unterlage durch Abziehen leicht vom Laminat trennen. Zudem werden die beim Nähprozeß hervorgerufenen Einschnürungen und Verdrängungen in der Faser wieder freigegeben. Es entsteht folglich ein Laminat, das ausschließlich aus Verstärkungsfasern und Matrix (Harz mit gelöstem Faden) besteht.

Es ist insbesondere dann von Vorteil, die Temperatureinwirkung während des Imprägnier- bzw. Aushärteprozesses für das Schmelzen des Fixierfadens auszunutzen, wenn eine TFP-Preform gebildet werden soll, die nur aus einem oder maximal zwei der in Fig. 2 dargestellten TFP-Aufbauten bestehen soll. In diesem Fall kann auf einen zusätzlichen, separaten Erwärmungsschritt verzichtet werden, da das Auflösen des Fixierfadens und das Imprägnieren bzw. Aushärten ökonomisch miteinander verbunden sind.

Für die Herstellung von beliebig dicken, mehrschichtigen TFP-Preforms ohne Zwischenschichten wird die Erwärmung in einem separaten Schritt durchgeführt, der vor dem Imprägnieren bzw. Aushärten der Verstärkungsfasern erfolgen. Zu diesem Zweck wird der in Figur 2 dargestellte Aufbau unter Druck auf eine Temperatur oberhalb des Schmelzpunktes des Fixierfadens erwärmt. Dies kann beispielsweise mit Hilfe einer beheizbaren Presse, einer externen Heizeinrichtung oder anderen geeigneten Mitteln zum Erwärmen der Struktur durchgeführt werden. Zusätzlich oder anstatt kann die Verstärkungsfaserstruktur 5a auch von der Rückseite her dosiert aufgeheizt werden, so dass der Nähfaden auf der Unterseite anschmilzt und den Untergrund 2 frei gibt. Der Fixierfaden wird also aufgeschmolzen und fixiert die Verstärkungsfasern nach dem Abkühlen durch seine Klebewirkung und nicht mehr aufgrund der beim Nähprozeß erzeugten Fadenverschlingung. Das Schmelzen der Fixierfäden bewirkt gleichzeitig, dass die beim Nähprozess hervorgerufenen Einschnürungen und Verdrängungen der Verstärkungsfasern wieder freigegeben werden, was eine geringere Faserwelligkeit und somit eine bessere Faserausnutzung zur Folge hat. Von dieser vorfixierten Faserstruktur läßt sich nun das Abreissgewebe leicht ablösen, ohne dass die Verstärkungsfasern ihre Lage ändern. Auf diese Weise entsteht eine vorfixierte Struktur äus Verstärkungsfasern 5b, die keine Fixierfäden enthält und insgesamt eine ausreichende Festigkeit bzw. Stabilität aufweist, um zu TFP-Preforms weiterverarbeitet werden zu können (vgl. Fig. 4).

Im nächsten Bearbeitungsschritt werden die derartig vorfixierten Verstärkungsfasern 5b übereinander gestapelt und anschließend mittels bekanntem Verfahren zum fertigen TFP-Bauteil imprägniert und ausgehärtet. Es entsteht ein Laminat, das ausschließlich aus Verstärkungsfasern besteht und keine Einschnürungen oder Verdrängungen der Verstärkungsfasern aufgrund des vernähten Fixierfadens aufweist. Ein derartig gestapelter Schichtaufbau aus Verstärkungsfasern ohne Zwischenschichten ist in Figur 4 schematisch dargestellt.

### Beispiele:

Auf einer CNC-Nähanlage wurden unidirektidriale TFP-Preforms mit unterschiedlichen Garnen zur Fixierung von Kohlefaserrovings (Tenax® HTS 5331-24K) auf dem Trägermaterial (Glasfaser-Leinwandgewebe 80g/m²) hergestellt. Die als Nähfäden verwendeten Garne waren ein schmelzbares CoPolyamid Mulitfilament-Schmelzgarn (Grilon®K85 110 dtex), das typischerweise einen Schmelzpunkt von 85 °C aufweist, sowie ein Polyamid Monofilamentgarn (Transfil®56 dtex), ein Polyamid Multifilamentzwirn (Serafil® 100 dtex) und ein Polyester Multifilamentgarn, das üblicherweise für die Herstellung von Multiaxialgelegen verwendet wird (texturiertes PSE 76 dtex). Es ist anzumerken, dass die zuletzt genannten Garne im Gegensatz zu dem erstgenannten bei den bei der Weiterverarbeitung auftretenden Temperaturen nicht schmelzen. Als weitere Variante wurden die Verstärkungsfasern mit Grilon® K85110 dtex auf das Abreissgewebe "Super Release Blue" aufgenäht. Die Kohlefaserrovings wurden im Abstand von 3,375 mm parallel zueinander abgelegt und mit einer Zickiack-Naht mit 4 mm Überstich und 2 mm Stickweite auf den Träger fixiert, insgesamt 4 unidirektionale Schichten übereinander. Zwei dieser Verstärkungsfaserstrukturen bzw. TFP-Halbzeuge wurden dann mit dem Trägermaterial nach außen übereinandergelegt und im membranunterstützten RI-Verfahren mit Hexcel RTM6 imprägniert und ausgehärtet. Den Laminatplatten wurden in Faserrichtung Proben entnommen, die im Zug- und Druckversuch bis zum Versagen belastet wurden. Fig. 5 zeigt einen Ausschnitt aus einer derartigen Probe, bei der die Verstärkungsfasern unter Verwendung des Fixiergarns Grilon® K85 auf Abreissgewebe Tenax® HTS 5331-24K aufgenäht wurden.

Es fällt auf, dass sich die tatsächlich erreichten Volumenanteile der Carbonfasern in den Laminatplatten trotz identischer Fertigungsbedingungen -alle Laminate wurden mit jeweils der gleichen Harzmenge gemeinsam in einem Autoklavzyklus gefertigt - stark unterscheiden. Die niedrigsten Werte werden mit Transfil® und Serafil® erreicht (ca. 50 - 52 %). Mit ca. 58 - 60 % werden mit dem texturierten Polyestergarn deutlich höhere Werte erreicht. Die Ursache hierfür dürfte in der wesentlich höheren Elastizität und Flexibilität aufgrund der Texturierung (Kräuselung) liegen, was zu einer gleichmäßigeren Faserverteilung bzw. Reduzierung von harzreichen Stellen führt. Eine weitere Steigerung des Faservolumenanteils (ca. 62 %) wird mit dem Schmelzgarn erreicht, welches die Kohlefaserrovings beim Infiltrieren frei gibt und tatsächlich in die Matrix übergeht. Durch Entfernen des Trägermaterials steigt der Wert auf ca. 65 - 67 % bei der in Figur 5 bzw. 6 dargestellten Variante. Der Vergleich der Zugfestigkeiten der unterschiedlichen Proben zeigt, dass eine deutliche Steigerung durch den Einsatz von Grilon® erzielt wird. Hier ist eine Verbesserung von 10 bis 30 % im Vergleich mit den drei Standardgarnen erzielt worden. Die Druckfestigkeiten der Grilon®-Proben sind durchschnittlich, hier wird der beste Wert mit Serafil® erreicht. Andererseits weisen die Grilon®-Proben eine eher unterdurchschnittliche Steifigkeit auf. Zusammenfassend ergibt sich gegenüber dem jeweils günstigsten Wert mit Standardfäden eine Steigerung der Zugfestigkeit um 30 %, der Druckfestigkeit um 23 %, des Zugmoduls um 8 % und des Druckmoduls um 26 %.

## Patentansprüche

1. Verfahren zum Herstellen von mehrschichtigen Tailored Fibre Placement-Preforms, insbesondere zum Herstellen von mehrschichtigen Tailored Fibre Placement-Preforms mit beliebiger Dicke und ohne störende Zwischenschichten, wobei
Verstärkungsfasern (1) mit einem Fixierfaden (3) auf eine Unterlage (2) aufgenäht werden, **dadurch gekennzeichnet, dass**
ein chemisch oder thermisch schmelzbarer Fixierfaden (3) verwendet wird, der zunächst zur Fixierung der Verstärkungsfasern (1) auf der Unterlage (2) dient und anschließend geschmolzen wird, so dass sich der Fixierfaden (3) unter Vorfixierung der Verstärkungsfasern (1) auflöst und die mechanischen Eigenschaften der durch Aufnähen der Verstärkungsfasern (1) auf der Unterlage (2) gebildeten Verstärkungsfaserstruktur (5a) nicht beeinflusst.

2. Verfahren zum Herstellen von mehrschichtigen Tailored Fibre Placement"-Preforms nach Anspruch 1, **gekennzeichnet durch** die Schritte:
- Stapeln von mindestens zwei Verstärkungsfaserstrukturen (5a) zu einer mehrschichtigen Stapelstruktur (6a);
- Schmelzen des Fixierfadens (3);
- Imprägnieren und Aushärten der Stapelstruktur (6a).

3. Verfahren zum Herstellen von mehrschichtigen Tailored Fibre Placement-Preforms nach Anspruch 2, **dadurch gekennzeichnet, dass** das Schmelzen des Fixierfadens (3) während des Imprägnier-und Aushärteprozesses der Stapelstruktur (6a) durch chemische Reaktion mit dem zum Imprägnieren verwendeten Stoff erfolgt.

4. Verfahren zum Herstellen von mehrschichtigen Tailored Fibre Placement-Preforms nach Anspruch 2, **dadurch gekennzeichnet, dass** das Schmelzen des Fixierfadens (3) durch externe Wärmeeinwirkung erfolgt, wobei der Fixierfaden (3) auf eine Temperatur oberhalb seines Schmelzpunktes erwärmt wird.

5. Verfahren nach Anspruch 4, **dadurch gekennzeichnet, dass** die Wärmeeinwirkung während des Imprägnier- und Aushärteprozesses zum Schmelzen des Fixierfadens (3) ausgenutzt wird.

6. Verfahren zum Herstellen von mehrschichtigen Tailored Fibre Placement-Preforms nach Anspruch 1, **gekennzeichnet durch** die Schritte:
- Schmelzen des Fixierfadens (3) nach dem Aufnähen der Verstärkungsfasern (1) auf der Unterlage (2) **durch** externe Wärmeeinwirkung, so dass die Verstärkungsfasern (1) **durch** die Klebewirkung des geschmolzenen Fixierfadens (3) vorfixiert werden und die Verstärkungsfaserstruktur (5a) eine ausreichende Stabilität aufweist;
- Stapeln von mehreren Verstärkungsfaserstrukturen (5a) zu einer Stapelstruktur (6a);
- Imprägnieren und Aushärten der Stapelstruktur (6a).

7. Verfahren zum Herstellen von mehrschichtigen Tailored Fibre Placement-Preforms nach einem der Ansprüche 2 bis 6, **dadurch gekennzeichnet, dass** die nach außen weisenden Unterlagen (2) der gebildeten Stapelstruktur (6a) durch Abziehen oder Ablösen entfernt werden.

8. Verfahren zum Herstellen von mehrschichtigen Tailored Fibre Placement-Preforms ohne Zwischenschichten nach Anspruch 1,
**gekennzeichnet durch** die Schritte:
- Schmelzen des Fixierfadens (3) nach dem Aufnähen der Verstärkungsfasern (1) auf die Unterlage (2) **durch** externe Wärmeeinwirkung, so dass die Verstärkungsfasern (1) **durch** die Klebewirkung des geschmolzenen Fixierfadens (3) vorfixiert sind und die Verstärkungsfaserstruktur (5a) eine ausreichende Stabilität aufweist;
- Abziehen oder Ablösen der Unterlage (2) von der Verstärkungsfaserstruktur (5a), wodurch eine Verstärkungsfaserstruktur ohne Unterlage (5b) entsteht;
- Stapeln von mehreren Verstärkungsfaserstrukturen ohne Unterlage (5b) zu einer Stapelstruktur (6b);
- Imprägnieren und Aushärten der Stapelstruktur (6b).

9. Verfahren nach einem der vorangegangenen Ansprüche, **dadurch gekennzeichnet, dass** der chemisch oder thermisch schmelzbare Fixierfaden (3) ein thermoplastischer Faden oder ein Schmelzklebegarn ist.

10. Verfahren nach Anspruch 9, **dadurch gekennzeichnet, dass** der thermisch schmelzbare Fixierfaden (3) ein CoPolyamid Multifilament-Schmelzklebegarn ist.

11. Verfahren nach einem der vorangegangenen Ansprüche, **dadurch gekennzeichnet, dass** die Verstärkungsfasern (1) kraftflussorientiert oder quasiisotrop auf der Unterlage (2) angeordnet sind.

## Claims

1. A method for producing multilayer tailored fibre placement preforms, in particular for producing multilayer tailored fibre placement preforms of any desired thickness and without disruptive interlayers, reinforcing fibres (1) being sewn onto a backing (2) with a fixing thread (3), **characterised in that** a chemically or thermally fusible fixing thread (3) is used, which serves initially to fix the reinforcing fibres (1) on the backing (2) and is then fused, so that the fixing thread (3) breaks down while pre-fixing the reinforcing fibres (1) and does not influence the mechanical properties of the reinforcing fibre structure (5a) formed by sewing the reinforcing fibres (1) on the backing (2).

2. A method for producing multilayer tailored fibre placement preforms according to claim 1, **characterised by** the steps:
- stacking of at least two reinforcing fibre structures (5a) to form a multilayer stacked structure (6a);
- fusing of the fixing thread (3);
- impregnation and curing of the stacked structure (6a).

3. A method for producing multilayer tailored fibre placement preforms according to claim 2,
**characterised in that** fusing of the fixing thread (3) proceeds during the process of impregnating and curing the stacked structure (6a) by chemical reaction with the substance used for impregnation.

4. A method for producing multilayer tailored fibre placement preforms according to claim 2,
**characterised in that** fusing of the fixing thread (3) proceeds through external application of heat, the fixing thread (3) being heated to a temperature above its fusing point.

5. A method according to claim 4, **characterised in that** application of heat is used during the impregnating and curing process to fuse the fixing thread (3).

6. A method for producing multilayer tailored fibre placement preforms according to claim 1,
**characterised by** the steps:
- fusing of the fixing thread (3) through external application of heat after sewing of the reinforcing fibres (1) on the backing (2), so that the reinforcing fibres (1) are pre-fixed by the adhesive action of the fused fixing thread (3) and the reinforcing fibre structure (5a) exhibits sufficient stability;
- stacking of a plurality of reinforcing fibre structures (5a) to form a stacked structure (6a);
- impregnation and curing of the stacked structure (6a).

7. A method for producing multilayer tailored fibre placement preforms according to one of claims 2 to 6, **characterised in that** the outward facing backings (2) of the stacked structure (6a) formed are removed by stripping or peeling off.

8. A method for producing multilayer tailored fibre placement preforms without interlayers according to claim 1, **characterised by** the steps:
- fusing of the fixing thread (3) through external application of heat after sewing of the reinforcing fibres (1) onto the backing (2), so that the reinforcing fibres (1) are pre-fixed by the adhesive action of the fused fixing thread (3) and the reinforcing fibre structure (5a) exhibits sufficient stability;
- stripping or peeling off of the backing (2) from the reinforcing fibre structure (5a), resulting in a reinforcing fibre structure without backing (5b);
- stacking of a plurality of reinforcing fibre structures without backing (5b) to form a stacked structure (6b);
- impregnation and curing of the stacked structure (6b).

9. A method according to one of the preceding claims, **characterised in that** the chemically or thermally fusible fixing thread (3) is a thermoplastic thread or fusible yarn.

10. A method according to claim 9, **characterised in that** the thermally fusible fixing thread (3) is a copolyamide multifilament fusible yarn.

11. A method according to one of the preceding claims, **characterised in that** the reinforcing fibres (1) are aligned with the flow of forces or are arranged virtually isotropically on the backing (2).

## Revendications

1. °) Procédé de production de préformes multicouches à placement des fibres adapté, en particulier pour produire des préformes multicouches à placement des fibres adapté d'une épaisseur quelconque et sans couches intermédiaires gênantes,
des fibres de fixation (1) étant cousues avec un fil de fixation (2) sur un substrat (3),
**caractérisé en ce que**
on utilise un fil de fixation fusible chimiquement ou thermiquement (3) qui sert d'abord à fixer les fibres de renfort (1) sur le substrat (2) et est ensuite fondu, de sorte que le fil de fixation (3) se dissout lors de la préfixation des fibres de renfort (1) et n'influe pas sur les propriétés mécaniques de la structure de fibres de renfort (5a) formée par la couture des fibres de renfort (1) sur le substrat (2).

2. °) Procédé de production de préformes multicouches à placement des fibres adapté selon la revendication 1,
**caractérisé par**
les étapes suivantes :
- empilement d'au moins deux structures de fibres de renfort (5a) pour former une structure de pile multicouche (6a) ;
- fusion du fil de fixation (3)
- imprégnation et durcissement de la structure de pile (6a).

3. °) Procédé de production de préformes multicouches à placement des fibres adapté selon la revendication 2,
**caractérisé en ce que**
la fusion du fil de fixation (3) se fait pendant le processus d'imprégnation et de durcissement de la structure de pile (6a) par réaction chimique avec le matériau utilisé pour l'imprégnation.

4. °) Procédé de production de préformes multicouches à placement des fibres adapté selon la revendication 2,
**caractérisé en ce que**
la fusion du fil de fixation (3) se fait par une action thermique extérieure, le fil de fixation (3) étant alors porté à une température supérieure à son point de fusion.

5. °) Procédé selon la revendication 4,
**caractérisé en ce que**
l'action thermique est utilisée pendant le processus d'imprégnation et de durcissement pour faire fondre le fil de fixation (3).

6. °) Procédé de production de préformes multicouches à placement des fibres adapté selon la revendication 1,
**caractérisé par**
les étapes suivantes :
- fusion du fil de fixation (3) après la couture des fibres de renfort (1) sur le substrat (2) par action thermique extérieure, de sorte que les fibres de renfort (1) sont préfixées par le pouvoir adhésif du fil de fixation (3) fondu et que la structure de renfort (5a) présente une stabilité suffisante ;
- empilement de plusieurs structures de fibres de renfort (5a) pour former une structure de pile (6a) ;
- imprégnation et durcissement de la structure de pile (6a).

7. °) Procédé de production de préformes multicouches à placement des fibres adapté selon une des revendications 2 à 6,
**caractérisé en ce que**
les substrats orientés vers l'extérieur (2) de la structure de pile (6) formée sont retirés par arrachage ou détachement.

8. °) Procédé de production de préformes multicouches à placement des fibres adapté sans couches intermédiaires selon la revendication 1,
**caractérisé par**
les étapes suivantes :
- fusion du fil de fixation (3) après la couture des fibres de renfort (1) sur le substrat (2) par action thermique extérieure, de sorte que les fibres de renfort (1) sont préfixées par le pouvoir adhésif du fil de fixation (3) fondu et que la structure de renfort (5a) présente une stabilité suffisante ;
- arrachage ou détachement du substrat (2) de la structure de fibres de renfort (5a), produisant une structure de fibres de renfort sans substrat (5b);
- empilement de plusieurs structures de fibres de renfort sans substrat (5b) pour former une structure de pile (6b) ;
- imprégnation et durcissement de la structure de pile (6b).

9. °) Procédé selon une des revendications précédentes,
**caractérisé en ce que**
le fil de fixation fusible chimiquement ou thermiquement (3) est un fil thermoplastique ou un fil de colle fusible.

10. °) Procédé selon la revendication 9,
**caractérisé en ce que**
le fil de fixation fusible thermiquement (3) est un fil de colle fusible multifilament copolyamide.

11. °) Procédé selon une des revendications précédentes,
**caractérisé en ce que**
les fibres de fixation (1) sont orientées selon le flux de force ou disposés de manière quasi isotrope sur le substrat (2).
